# EUROPÄISCHE PATENTSCHRIFT

(11) **EP 0 878 336 B1**
(45) Veröffentlichungstag und Bekanntmachung des Hinweises auf die Patenterteilung: **24.09.2003**
(21) Anmeldenummer: 98107701.9
(22) Anmeldetag: 28.04.1998
(51) Int. Cl.: B60J 1/17

(54) **Türfenster für Kraftfahrzeuge mit einer versenkbaren Verbundglasscheibe**
Window for motor vehicle with retractable laminated glazing
Fenêtre de véhicule à moteur avec verre feuilleté escamotable

(30) Priorität: 14.05.1997 DE 19720075
(43) Veröffentlichungstag der Anmeldung: 18.11.1998
(73) Patentinhaber: Saint-Gobain Glass France, 92400 Courbevoie (FR)
(72) Erfinder: Linnhoefer, Dieter, Dr., 52134 Herzogenrath (DE); Kraemling, Franz, Dr., 52072 Aachen (DE)
(74) Vertreter: Dederichs, August

(56) Entgegenhaltungen:
- EP-A- 0 467 645
- EP-A- 0 505 174
- US-A- 4 663 901

## Beschreibung

Die Erfindung betrifft ein Türfenster für Kraftfahrzeuge mit einer versenkbaren Glasscheibe, seitlichen Führungsschienen für die Glasscheibe, von denen die der Drehachse der Tür abgewandte Führungsschiene bei vollständig abgesenkter Glasscheibe innerhalb des Türschachts in einem Abstand A von wenigstens 10 cm oberhalb der Unterkante der Glasscheibe endet, und mit wenigstens einem am unteren Rand der Glasscheibe zum Ankoppeln des Hebemechanismus vorgesehenen Befestigungselement, das in einem Abstand B von der der Drehachse der Tür abgewandten Seitenkante der Glasscheibe endet.

Türfensterkonstruktionen dieser Art sind bekannt und bei verschiedenen Fahrzeuginodellen üblich. Die in den Führungsschienen versenkbar angeordneten Glasscheiben bestehen in der Regel aus thermisch vorgespanntem Glas, sogenanntem Einscheibensicherheitsglas. Aufgrund der Vorspannung weisen derartige Glasscheiben eine hohe Biegefestigkeit auf. Gegen mechanische Belastungen, wie sie beispielsweise bei heftigem Zuschlagen der Fahrzeugtür entstehen, sind solche Einscheibensicherheitsglasscheiben unempfindlich.

In neuerer Zeit wird aus verschiedenen Gründen in zunehmendem Maße auch für Türfenster mit versenkbaren Glasscheiben Verbundsicherheitsglas eingesetzt. Verbundsicherheitsglas bietet beispielsweise eine höhere Einbruchsicherheit als Einscheiben-Sicherheitsglas. Außerdem haben Verbundsicherheitsglasscheiben bessere Schalldämmeigenschaften. Schließlich können bei Verbundsicherheitsglas zwischen den Einzelglasscheiben transparente Folien mit bestimmten zusätzlichen Eigenschaften angeordnet werden, beispielsweise mit einer teilreflektierenden Schicht versehene Folien, so daß sie dadurch eine zusätzliche Wärmeschutzfunktion erfüllen können.

Türfensterscheiben aus Verbundglas haben üblicherweise eine Gesamtdicke von etwa 3 bis 6 mm. Das bedeutet, daß die beiden einzelnen Silikatglasscheiben der Verbundglasscheibe jeweils eine Dicke von 1,0 bis 2,5 mm aufweisen. Selbst wenn diese einzelnen Glasscheiben vorgespannt werden, sind Verbundglasscheiben dieser Art in jedem Fall wesentlich empfindlicher gegen mechanische Belastungen als die üblichen Einscheibensicherheitsgläser, weil sich bei derart dünnen Glasscheiben nur eine verhältnismäßig geringe Vorspannung erzeugen läßt.

Es hat sich gezeigt, daß es bei Fensterkonstruktionen der eingangs genannten Art vorkommen kann, daß bei heftigem Zuschlagen der Tür die Scheibe zerstört wird, wenn sie aus Verbundsicherheitsglas besteht. Eine wesentliche Verringerung der Bruchgefahr ließe sich dadurch erreichen, daß die der Drehachse abgewandte Führungsschiene im Türschacht nach unten so weit verlängert wird, daß die Verbundglasscheibe auch in abgesenktem Zustand vollständig eingefaßt, das heißt von der Führungsschiene gehalten wird. Aus konstruktiven Gründen läßt sich das jedoch in vielen Fällen nicht durchführen, weil dieser Raum für andere Konstruktionsteile, beispielsweise für den Hebemechanismus für die Glasscheibe, benötigt wird.

Der Erfindung liegt die Aufgabe zugrunde, bei Türfenstern der eingangs genannten Art ohne wesentliche Veränderung der Türkonstruktion die Ausgestaltung des Türfensters insgesamt so zu treffen, daß die Gefahr der Zerstörung einer Fensterscheibe aus Verbundglas durch heftiges Zuschlagen der Tür praktisch ausgeschlossen wird.

Gemäß der Erfindung wird diese Aufgabe dadurch gelöst, daß die Glasscheibe eine Verbundglasscheibe mit einer Gesamtdicke von 3 bis 6 mm ist, die wenigstens im unteren Randbereich durch Vorspannung eine Biegefestigkeit in Höhe von wenigstens 75 MPa aufweist, und daß die Anordnung des am unteren Rand der Verbundglasscheibe angreifenden Befestigungselements so getroffen wird, daß der Abstand B zwischen dem Ende des Befestigungselements und der der Drehachse der Tür abgewandten Seitenkante der Verbundglasscheibe höchstens 20 cm beträgt.

Der Erfindung liegt die Erkenntnis zugrunde, daß bei Türfenstern der eingangs genannten Art die Zerstörung der Verbundglasscheiben beim Zuschlagen der Tür dadurch hervorgerufen wird, daß in den der Drehachse der Tür abgewandten unteren Bereich der Glasscheibe durch das Befestigungselement Schwingungen induziert werden, durch die Biegespannungen hervorgerufen werden, die die Biegefestigkeit der Verbundglasscheibe übersteigen. Da die Biegefestigkeit des Verbundglases nicht auf die an sich erforderlichen Werte erhöht werden kann, sieht die Erfindung vor, zusätzlich durch gezielte Anordnung der Angriffspunkte der die Schwingungen induzierenden mechanischen Teile die Konstruktion so zu beeinflussen, daß das Risiko der Zerstörung der Glasscheiben praktisch ausgeschlossen wird.

Es hat sich gezeigt, daß das zugrunde liegende Problem mit Verbundglasscheiben ohne Vorspannung nicht in zufriedenstellender Weise gelöst werden kann, sondern daß in jedem Fall eine durch Vorspannung erhöhte Mindestbiegefestigkeit erforderlich ist, und zwar wenigstens im unteren Randbereich, in dem die genannten Schwingungen auftreten. Die erforderliche Vorspannung wird zweckmäßigerweise durch beschleunigte Abkühlung der Glasscheiben im Anschluß an den Biegevorgang erzeugt. Sie kann jedoch auch durch Ionenaustausch erzeugt werden, ein Verfahren, das auch als "chemisches Vorspannen" bekannt ist.

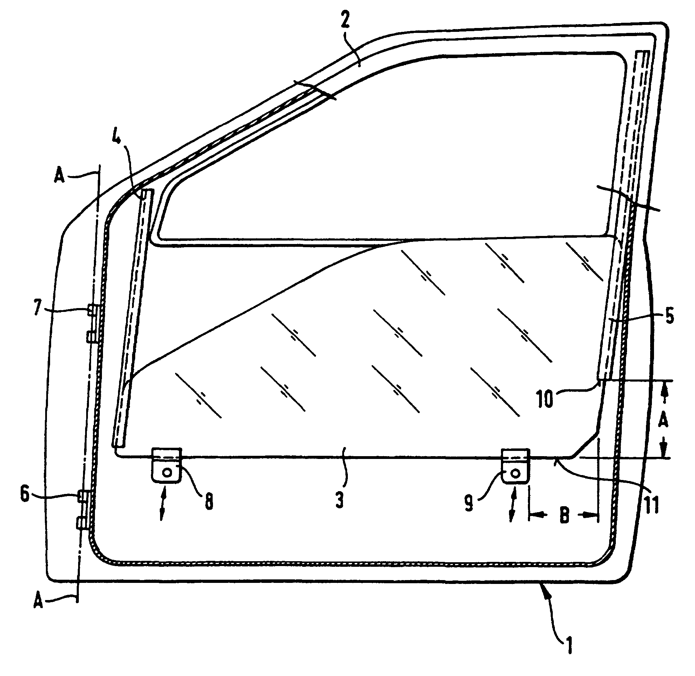

Vorzugsbereiche für die Höhe der Druckvorspannungen und für die Dimensionierung des Abstandes B ergeben sich aus den Unteransprüchen sowie aus der nachfolgenden Beschreibung eines Ausführungsbeispiels anhand der Zeichnung.

Die Zeichnung zeigt in einer vereinfachten Darstellung anhand einer aufgebrochenen Ansicht eine Kraftfahrzeugtür mit einer im Türschacht versenkbaren Glasscheibe in abgesenkter Stellung.

Die Tür umfaßt den den Türschacht aufweisenden Türkörper 1, den Fensterrahmen 2, die versenkbare Fensterscheibe 3 und die beiden Führungsschienen 4 und 5. Die Tür ist über Scharniere 6 und 7 am Rahmen der Fahrzeugkarosserie angelenkt, so daß sie um die Achse A-A verschwenkbar ist. An der Fensterscheibe 3, die in den Führungsschienen 4, 5 in vertikaler Richtung verschiebbar ist, sind am unteren Rand zwei Befestigungselemente 8, 9 befestigt, beispielsweise durch eine Klebeverbindung, eine Klemmverbindung oder durch eine eine Bohrung in der Fensterscheibe durchdringende Schraubverbindung. An diesen Befestigungselementen 8, 9 greifen die Kraftübertragungselemente einer Scheibenhebevorrichtung an, die der besseren Übersicht wegen in der Zeichnung nicht dargestellt ist und die grundsätzlich aus einer beliebigen Konstruktion bestehen kann.

Die an den Befestigungselementen 8, 9 angreifenden Kraftübertragungselemente sind in der Regel in der Richtung senkrecht zur Scheibenfläche nicht geführt. Beim Zuschlagen der Tür wirkt daher nicht nur die von der Masse der Befestigungselemente 8, 9 herrührende kinetische Energie senkrecht auf die Glasscheibe 3 ein, sondern darüber hinaus die Masse des in Schwingung geratenen Teils der Glasscheibe selbst sowie auch die von den verhältnismäßig schweren Kraftübertragungselementen auf die Befestigungselemente 8, 9 übertragene kinetische Energie.

Der der Drehachse A-A benachbarte Bereich der Fensterscheibe und der in diesem Bereich auf sie einwirkenden mechanischen Elemente ist in der Regel unkritisch, so daß hier keine besonderen Maßnahmen getroffen zu werden brauchen. Die schädlichen Kräfte, die zur Zerstörung der Fensterscheibe 3 führen können, entstehen in dem von der Drehachse A-A entfernten Bereich der Fensterscheibe, in dem die Fensterscheibe einerseits in der starren Führungsschiene 5 gehalten ist, und in dem über das Befestigungselement 9 die durch die kinetische Energie dieses Elements, der Glasscheibe und der hieran angreifenden Vorrichtungen hervorgerufenen Kräfte auf die Glasscheibe einwirken.

Die Führungsschiene 5 auf der der Drehachse A-A abgewandten Seite erstreckt sich nur so weit nach unten in den Raum des Türschachtes hinein, daß das untere Ende 10 dieser Führungsschiene in einem Abstand A von mehr als 10 cm von der unteren Kante 11 der Verbundglasscheibe 3 endet, wenn diese bis in ihre unterste Endstellung abgesenkt ist. Der Abstand B zwischen der geführten Seitenkante der Fensterscheibe 3, bzw. deren Verlängerung, und dem Befestigungselement 9 darf höchstens etwa 20 cm betragen. Vorzugsweise beträgt der Abstand B 7 bis 13 cm.

Die Fensterscheibe 3 besteht aus Verbundglas, das heißt aus zwei Einzelglasscheiben von jeweils etwa 2 mm Dicke, die durch eine thermoplastische Zwischenschicht miteinander verbunden sind. Dabei kann die thermoplastische Zwischenschicht auch aus zwei PVB-Folien bestehen, zwischen denen eine Folie aus einem schlagzähen Polymer, insbesondere aus PET, angeordnet ist, die ihrerseits beispielsweise mit einer wärmestrahlenreflektierenden Schicht versehen sein kann. Herkömmliche Verbundglasscheiben von 5 mm Dicke ohne Druckvorspannungen haben eine Biegefestigkeit von 45 MPa, gemessen nach DIN 52292, Teil 2. Für das erfindungsgemäße Türfenster sind eine oder vorzugsweise beide Einzelglasscheiben der Verbundglasscheibe durch schroffe Abkühlung der Glasscheiben nach dem Biegen mit einer Druckvorspannung in Höhe von wenigstens 30 MPa und vorzugsweise in Höhe von 50 bis 70 MPa versehen. Auf diese Weise wird die Biegefestigkeit der Verbundglasscheibe im unteren Randbereich auf 75 bis 115 MPa erhöht, vorzugsweise auf Werte von 75 bis 100 MPa.

## Patentansprüche

1. Türfenster für Kraftfahrzeuge mit einer versenkbaren Glasscheibe, seitlichen Führungsschienen für die Glasscheibe, von denen die der Drehachse der Tür abgewandte Führungsschiene bei vollständig abgesenkter Glasscheibe innerhalb des Türschachts in einem Abstand A von wenigstens 10 cm oberhalb der Unterkante der Glasscheibe endet, und mit wenigstens einem am unteren Rand der Glasscheibe zum Ankoppeln des Hebemechanismus vorgesehenen Befestigungselement, das in einem Abstand B von der der Drehachse der Tür abgewandten Seitenkante der Glasscheibe endet, **dadurch gekennzeichnet, daß** die Glasscheibe (3) eine Verbundglasscheibe mit einer Gesamtdicke von 3 bis 6 mm ist, die wenigstens im unteren Randbereich durch Vorspannung eine Biegefestigkeit in Höhe von wenigstens 75 MPa aufweist, und daß die Anordnung des am unteren Rand der Verbundglasscheibe angreifenden Befestigungselements so getroffen wird, daß der Abstand B zwischen dem Ende des Befestigungselements (9) und der der Drehachse (A-A) der Tür abgewandten Seitenkante der Verbundglasscheibe (3) höchstens 20 cm beträgt.

2. Türfenster nach Anspruch 1, **dadurch gekennzeichnet, daß** wenigstens eine der die Verbundglasscheibe (3) bildenden Einzelglasscheiben thermisch oder chemisch derart vorgespannt ist, daß die Druckvorspannung an der Oberfläche der Glasscheibe wenigstens 30 MPa beträgt.

3. Türfenster nach Anspruch 2, **dadurch gekennzeichnet, daß** die Druckvorspannung an der Oberfläche der Glasscheibe 50 bis 70 MPa beträgt.

4. Türfenster nach einem der Ansprüche 1 bis 3, **dadurch gekennzeichnet, daß** der Abstand B zwischen dem Ende des Befestigungselements (9) und der der Drehachse (A-A) der Tür abgewandten Seitenkante der Verbundglasscheibe (3) zwischen 7 und 13 cm beträgt.

## Claims

1. A door window for motor vehicles having a lowerable glass pane, lateral guide rails for the glass pane, of which the guide rail remote from the pivot axis of the door ends at a distance A of at least 10 cm above the bottom edge of the glass pane when the glass pane is lowered fully within the door shaft, and having at least one fastening element provided at the lower edge of the glass pane for coupling on of the raising mechanism, which fastening element ends at a distance B from the side edge of the glass pane remote from the pivot axis of the door, **characterised in that** the glass pane (3) is a pane of laminated glass with a total thickness of 3 to 6 mm, which exhibits flexural strength of the order of at least 75 MPa at least in the lower edge area due to prestressing, and **in that** the arrangement of the fastening element acting on the lower edge of the laminated glass pane is such that the distance B between the end of the fastening element (9) and the side edge of the laminated glass pane (3) remote from the pivot axis (A-A) of the door amounts to a maximum of 20 cm.

2. A door window according to claim 1, **characterised in that** at least one of the individual glass panes forming the laminated glass pane (3) is thermally or chemically prestressed in such a way that the compressive prestress at the surface of the glass pane amounts to at least 30 MPa.

3. A door window according to claim 2, **characterised in that** the compressive prestress at the surface of the glass pane amounts to 50 to 70 MPa.

4. A door window according to one of claims 1 to 3, **characterised in that** the distance B between the end of the fastening element (9) and the side edge of the laminated glass pane (3) remote from the pivot axis (A-A) of the door amounts to between 7 and 13 cm.

## Revendications

1. Fenêtre de porte pour véhicules automobiles, avec une vitre escamotable, des rails de guidage latéral pour la vitre, parmi lesquels le rail de guidage qui n'est pas tourné vers l'axe de rotation de la porte se termine à une distance A d'au moins 10 cm au-dessus du bord inférieur de la vitre lorsque la vitre est entièrement enfoncée dans la porte et avec, sur le bord inférieur de la vitre, pour accoupler cette dernière au mécanisme de levage, au moins un élément de fixation qui se termine à une distance B du bord latéral de la vitre qui n'est pas tourné vers l'axe de rotation de la porte,
**caractérisée en ce que** la vitre (3) est une vitre en verre feuilleté d'une épaisseur totale de 3 à 6 mm qui, au moins dans la bordure inférieure, présente par précontrainte une résistance en flexion à hauteur d'au moins 75 MPa et **en ce que** l'agencement de l'élément de fixation qui engage le bord inférieur de la vitre en verre feuilleté est réalisé de telle sorte que la distance B entre l'extrémité de l'élément de fixation (9) et le bord latéral de la vitre (3) en verre feuilleté non tourné vers l'axe de rotation (A-A) de la porte soit d'au plus 20 cm.

2. Fenêtre de porte selon la revendication 1, **caractérisée en ce qu'**au moins l'une des feuilles de verre individuelles qui forment la vitre (3) en verre feuilleté est précontrainte par voie thermique ou chimique de telle sorte que la précontrainte de compression soit d'au moins 30 MPa à la surface de la vitre.

3. Fenêtre de porte selon la revendication 2, **caractérisée en ce que** la précontrainte de compression est d'au moins 50 à 70 MPa à la surface de la vitre.

4. Fenêtre de porte selon l'une quelconque des revendications 1 à 3, **caractérisée en ce que** la distance B entre l'extrémité de l'élément de fixation (9) et le bord latéral de la vitre (3) en verre feuilleté non tourné vers l'axe de rotation (A-A) de la porte est comprise entre 7 et 13 cm.
